# EUROPEAN PATENT APPLICATION

(11) **EP 0 929 024 A1**
(43) Date of publication of application: **14.07.1999**
(21) Application number: 98310808.5
(22) Date of filing: 31.12.1998
(51) Int. Cl.: G06F 1/00, G06K 11/18

(54) **Method and apparatus for preventing unintentional perusal of computer display information**

(30) Priority: 07.01.1998 GB 9800164; 13.06.1998 GB 9812765
(71) Applicant: Evans, Ian David, Thame, Oxon OX9 3XH (GB)
(72) Inventor: Evans, Ian David, Thame, Oxon OX9 3XH (GB)
(74) Representative: Coles, Graham Frederick

(57) **Abstract**

A unit (6) plugged permanently into the video-output (8) of a data-processing unit (2) maintains video-signal supply to a monitor (3) only while a radio signal continues to be received by a loop-antenna (12) from a card (14) worn by an operator. The signal, possibly encoded, is transmitted from the card (14) by a transponder (15) in response to reception by the card (14) of radio-frequency, also possibly encoded, transmitted locally of the processing unit (2) from the antenna-loop (12). Video-signal supply to the monitor (3) from the video-output (8) is interrupted within the plugged-in unit (6) when the card-signal is no longer detected upon movement of the operator out of range of the antenna (12), and is not restored until the card-signal is detected again with return of the operator. Supply of data and control signals to and from the processing unit (2) may also be interrupted, and rather than leaving the screen (4) blank, the monitor (3) may be supplied during the interruption with video signals from the plugged-in unit (6) for message/pattern display.

## Description

The present invention relates to security and in particular to computer security.

The information displayed on a computer screen at a workstation is often of a secret or sensitive nature, and accordingly it is desirable to be able to limit the possibility of anybody other than the operator viewing the screen while the information is being displayed. Security in this regard can usually be achieved to a reasonably-acceptable degree while the operator is present at the workstation, but is materially prejudiced whenever the operator leaves the workstation for even a short period of time.

A screen-saving program is often used with computer equipment to blank the screen or replace the screen-content (for example, with graphic images) whenever there is keyboard-inactivity for a pre-set interval. But this interval for conventional operation of the equipment, is much longer that would be effective to ensure that the screen-information is not retained clearly displayed for a significant period following departure of the operator; in any event, the information can be quickly restored to the screen by anybody of ill-intent, simply by depressing a key of the keyboard or typing in a simple password. Essentially the same problem applies if power to the monitor is turned off, since the power switch can be readily operated to restore the information. The only secure procedure is for the operator to exit the application program or at least the displayed file, whenever he/she leaves the workstation unattended. However, such a procedure is generally time consuming and because it becomes tedious if the operator is required frequently to leave the station unattended, it can be readily omitted or overlooked.

It is an object of the present invention to provide a security method and security apparatus that may be used to reduce the above problem.

According to one aspect of the present invention there is provided a security method wherein computer equipment having a visual-display screen for displaying information is operated in an active mode in dependence upon detection of proximity of an operator to the equipment, detection of such proximity being dependent upon the operator exhibiting a predetermined sensed-characteristic, and wherein while the computer equipment is in its active mode with information displayed on the screen, the computer equipment is switched to an inactive mode clearing the screen of that information when, and for as long as, proximity of the operator as aforesaid, is no longer detected.

According to another aspect of the invention security apparatus for use with computer equipment having a visual-display screen for displaying information, includes means for detecting the proximity of an operator to the equipment for operating the computer equipment in an active mode, detection of such proximity being dependent upon the operator exhibiting a predetermined sensed-characteristic, and wherein the security apparatus also includes switch means for operation while the computer equipment is in its active mode with information displayed on the screen, to switch the computer equipment to an inactive mode by which the screen is cleared of that information when, and for as long as, proximity of the operator as aforesaid, is no longer detected by the detecting means.

It is another object of the present invention to provide computer equipment for which the problem discussed above is reduced, and in this regard and according to a further aspect of the invention there is provided computer equipment having a visual-display screen for displaying information, wherein the computer equipment is operative in an active mode in dependence upon detection of proximity of an operator to the equipment, detection of such proximity being dependent upon the operator exhibiting a predetermined sensed-characteristic, and wherein the computer equipment is arranged such that while in its active mode with information displayed on the screen, it is switched to an inactive mode clearing the screen of that information when, and for as long as, proximity of the operator as aforesaid, is no longer detected.

The sensed characteristic in the method, apparatus and equipment of the invention may be that exhibited by a signal-emitting device, for example incorporated in a badge, card or other item, carried by the operator. The emitted signal may be a radio-frequency signal and may be encoded. More particularly, the device may include a transponder and in this case a radio-frequency transmission made locally of the computer equipment may invoke the transmission of a response signal from the transponder. The transponder may simply re-transmit the signal it receives (whether this is encoded or otherwise), but may be responsive to the received signal to transmit its response in a uniquely encoded or other form.

The visual-display screen of the computer equipment may be the screen of a cathode-ray tube, liquid-crystal display or other visual-display device, and the inactive mode may be that in which supply of video-signals for display by the visual-display screen is interrupted. However, the supply of other signals to and/or from the computer equipment may also be interrupted in this mode. For example, the connection by which data is keyed into the equipment from a keyboard may be interrupted so that control or corruption of the data already within the equipment, and control of the equipment to provide output data, is precluded. Similarly, connections to and from a mouse or other pointer device, a printer, a computer network, and a modem or other connection for data communications, may be interrupted in the inactive mode.

Switching of the computer equipment to its inactive mode will in the normal course of events leave the visual-display screen blank. This can be avoided by replacing the display of information on the screen during the active mode, by a display which throughout the period of the inactive mode, is derived from an auxiliary source of video signals.

A computer workstation including computer equipment fitted with security apparatus in accordance with the present invention, will now be described, by way of example, with reference to the accompanying drawings, in which:
Figure 1 illustrates the workstation including the computer equipment fitted with the security apparatus of the invention, and showing an operator seated at the equipment;
Figure 2 is a block schematic representation of the security apparatus as fitted to the computer equipment of Figure 1; and
Figures 3 and 4 are illustrative of modifications of the security apparatus of Figures 1 and 2.

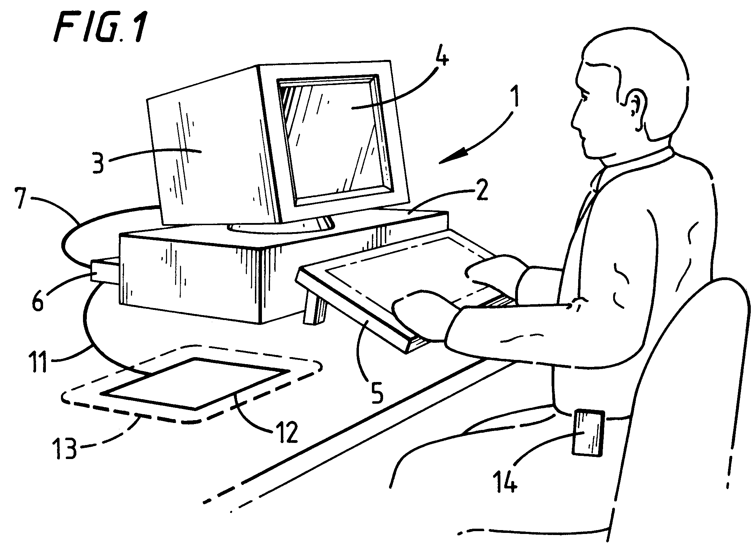

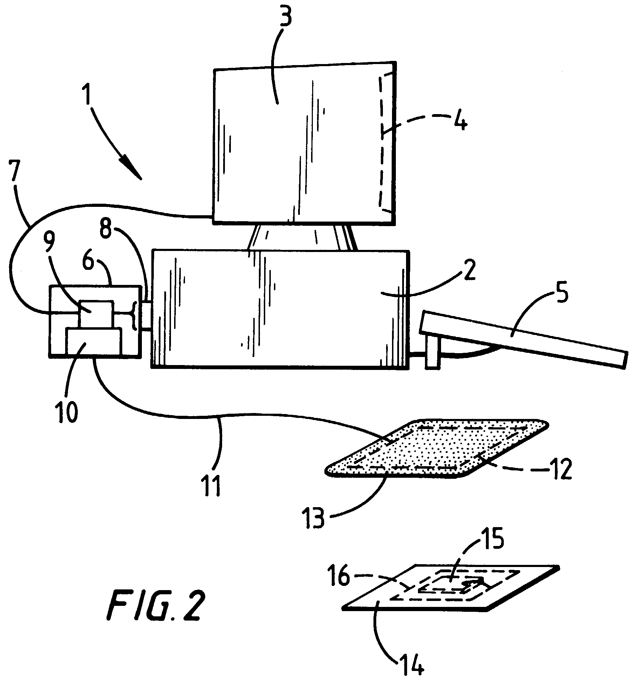

Referring to Figures 1 and 2, the computer equipment 1 at the workstation comprises a data-processing unit 2, a monitor (VDU) 3 having a screen 4, and a keyboard 5. To this extent the computer equipment is of conventional form, the keyboard 5 enabling the operator seated at the workstation to key-in data and commands for execution by the equipment 1. Information dependent upon what is keyed-in, what is already stored in the unit 2, and the outcome of processing by the unit 2, is displayed on the screen 4.

The information displayed on the screen 4 in many cases is of a secret or sensitive nature, and security in this regard is materially prejudiced if the operator leaves the workstation for even a short period of time. This problem is overcome with the computer equipment 1 in the present case, however, in that the equipment 1 is fitted with a unit 6 that controls video-signal supply to the monitor 3 in dependence upon the continued presence of the operator at the workstation. In this regard, the unit 6, which is connected to the monitor 3 by a cable 7, plugs into, and is secured by snap-off screws in, the video-signal output socket 8 of the unit 1, such that the supply of video signals from the unit 2 to the monitor 3 is via a switching circuit 9 of the unit 6.

The unit 6 is powered from the low-voltage supply (not shown) to the keyboard 5, and incorporates a radio-frequency transmitter-receiver circuit 10 that controls the switching circuit 9. The circuit 10 is connected via a fine cable 11 to an antenna loop 12 that is conveniently incorporated into a mouse mat 13 at the workstation, and is operative to supply radio-frequency signals to the loop 12 for transmission, and to detect corresponding signals received by the loop 12. In the latter respect, the operator wears a badge or card 14 that incorporates a radio-frequency transponder 15 interconnected with an antenna loop 16 of the card 14.

While the operator wearing the card 14 remains in proximity to the antenna loop 12, radio-frequency signals which are supplied repetitively from the circuit 10 for transmission from the loop 12, are received by the loop 16. The transponder 15 is triggered by these received signals to supply response radio-frequency signals for transmission from the loop 16 and consequent reception by the loop 12 and detection by the circuit 10. As long as these signals continue to be detected by the circuit 10 the switching circuit 9 is activated to pass the video signals from the unit 2 to the monitor 3, maintaining the display on the screen 4.

If the operator moves away from the equipment 1 so that the card 14 is out of range of transmission from the loop 12, the transponder 15 is not triggered and response signals are no longer received by the loop 12 for detection by the circuit 10. The circuit 10 responds promptly to this condition to deactivate the switching circuit 9 so as to block supply of the video signals from the unit 2 to the monitor 3. The screen 4 is consequently cleared and remains blank until such time as the operator returns. Return of the operator brings the card 14 into range of the transmission from the loop 12 so that the transponder-response signals are again detected by the circuit 10 to activate the switching circuit 9.

The transponder 15 may be triggered by the received signals to re-transmit them for reception by the antenna loop 12, but on the other hand, may be of a nature to transmit to the loop 12 signals different from the signals by which it is triggered. Also, the signals transmitted from the loop 12 may be encoded (in frequency or pulse), and in these circumstances the triggering of the transponder 15 may be dependent on recognition of the encoding. Furthermore, the signals transmitted by the transponder 15 when triggered may be encoded (in frequency or pulse) in accordance with a security code of the card 14 (for example, identifying the operator).

In this latter case, it may be arranged that the card 14 limits operator-access. For example, the circuit 10 may be programmed or otherwise set, to detect only one particular security code identified by the signals received by the loop 12, so that only the one operator may operate the equipment; clearly, the circuit 10 may as an alternative be responsive to more than one security code so that operating-access to the equipment 1 is afforded to any of a limited group of operators.

The unit 6 together with the loop 12 and the card 14 may be supplied as a kit for enhancing security of computer equipment at an existing workstation. However, the function of the unit 6 may instead be provided in a module that is incorporated in the processor unit 2 or the monitor 3 during manufacture of the equipment.

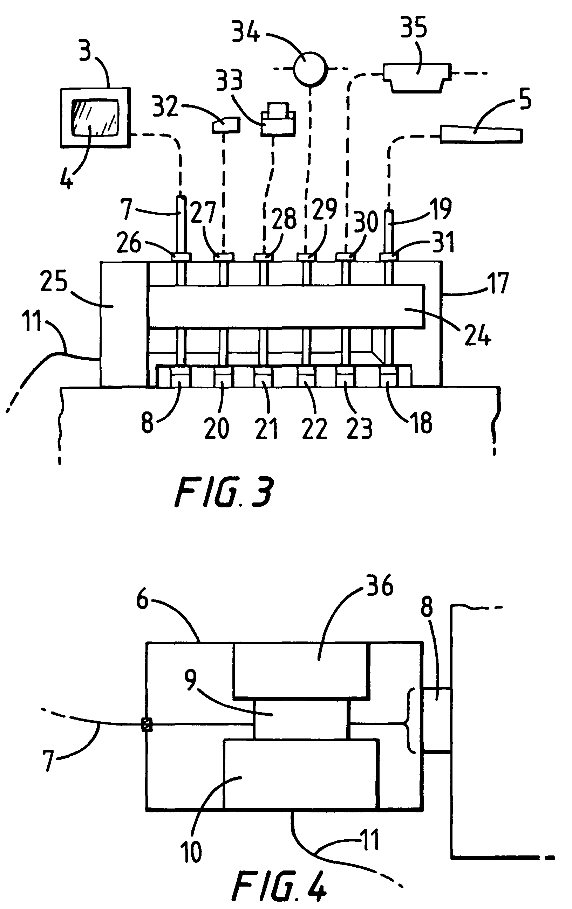

The security function of the method, apparatus and equipment described above with reference to Figures 1 and 2 may be extended to disable other functions of the computer equipment as well as that of the monitor 3, when the operator moves away to take the card 14 out of effective range. In particular, the keyboard 5 may be disabled as well as the monitor 3, so that no keyed-input to the unit 2 can be made until the operator returns to bring the card 14 back into effective range of the loop 12. To this end, the unit 6 may be replaced as illustrated in Figure 3 by a unit 17 (shown in schematic plan) which not only plugs into the video-output socket 8 of the unit 2 but also into the socket 18 for the input/output lead 19 of the keyboard 5; the unit 17 is powered from the low-voltage supply of the socket 18 in parallel with the keyboard 5. More especially, the unit 17 illustrated in this case provides an interface between the sockets 8 and 18 and the other signal sockets such as sockets 20 to 23 for serial or parallel connections to and from the unit 2; the sockets 20 to 23 may be those for connection, as illustrated, to and from a mouse 32 (or other pointer device), a printer 33, a computer-network node 34, and a modem 35 (or other connection) for data communications.

The unit 17, which is secured (by snap-off screws) permanently plugged into and blocking access to the sockets 8, 18 and 20 to 23, incorporates a switching circuit 24 that is controlled by a radio-frequency transmitter-receiver circuit 25. The circuit 25 corresponds to the circuit 10 in that while the card 14 remains within effective range of the equipment 1 it activates the switching circuit 24 to connect the sockets 8, 18 and 20 to 23 through to corresponding sockets 26 to 31 respectively. Accordingly, all signal connections to the unit 2 that would normally be made via the sockets 8, 18 and 20 to 23 and now made via the sockets 26 to 31 respectively, remain effective and fully functioning while the operator remains with the equipment 1. However, if the operator moves away taking the card 14 out of effective range, the response of the circuit 25 is to deactivate the switching circuit 24 and thereby break the interconnections between the sockets 8, 18 and 20 to 23 and sockets 26 to 31. This not only blanks the screen 4 and precludes data being keyed into the unit 2 from the keyboard 5, but also blocks all other data output from, and data input to, the unit 2. The unit 2 is held in this condition of data isolation until the operator returns bringing the card 14 into range again to cause the circuit 25 to activate the switching circuit 24 and restore the connections between the sockets 8, 18 and 20 to 23 to the sockets 26 to 31.

As described above, the screen 4 of the monitor 3 remains blank while the switching circuit 9 or 24 is deactivated. This is not necessarily so, in that the circuit 9 or 24 may be effective to connect an auxiliary source of video signals to the monitor 3 in place of the unit 2, whenever deactivated. The addition to the unit 6 of Figures 1 and 2 of a suitable auxiliary video-signal source for this purpose, is illustrated in Figure 4.

Referring to Figure 4, the unit 6 in this case includes an auxiliary video-signal generator 36 that is operative whenever the switching circuit 9 is deactivated, to supply video signals via the circuit 9 to the cable 7 in place of the signals from the socket 8. The video signals supplied are effective to produce a message and/or display pattern on the screen 4. This condition is maintained until the switching circuit 9 is again activated from the circuit 10 upon return of the operator, to restore the display to that from the unit 2.

The units 6 and 17 are illustrated as attachments to the data-processing unit 2 of the computer equipment 1, but it will be appreciated that this is not necessarily so and that they may be incorporated functionally at least, within the unit 2 itself. Moreover, although the antenna loop 12 is illustrated as conveniently incorporated into the mouse mat 13, this too is not a necessity since the loop 12 might be embodied within the unit 6 or 17 or elsewhere within the computer equipment 1.

## Claims

1. A security method wherein computer equipment having a visual-display screen for displaying information is operated in an active mode in dependence upon detection of proximity of an operator to the equipment, detection of such proximity being dependent upon the operator exhibiting a predetermined sensed-characteristic, and wherein while the computer equipment is in its active mode with information displayed on the screen, the computer equipment is switched to an inactive mode clearing the screen of that information when, and for as long as, proximity of the operator as aforesaid, is no longer detected.

2. A security method according to Claim 1 wherein the proximity of the operator is detected by detecting proximity to the equipment of a device having the sensed-characteristic, carried by the operator.

3. A security method according to Claim 2 wherein said device emits a signal and the computer equipment is maintained in its active mode only while emission of the signal by said device continues to be detected by the computer equipment.

4. A security method according to Claim 2 or Claim 3 wherein the signal emitted by the device is encoded and the computer equipment is maintained in its active mode only while emission of the signal with a specific encoding is detected by the computer equipment.

5. A security method according to any one of Claims 2 to 4 wherein said signal is a specific radio-frequency signal emitted by said device.

6. A security method according to Claim 5 wherein a radio-frequency signal transmission is made locally to the computer equipment, and said device emits said specific radio-frequency signal in dependence upon reception thereby of this radio-frequency signal transmission.

7. A security method according to Claim 6 wherein said radio-frequency signal transmission is encoded, and said device transmits said specific radio-frequency signal in dependence upon recognition thereby of the encoding of the received radio-frequency signal transmission.

8. A security method according to any one of Claims 1 to 7 wherein the supply of data and control signals to and/or from a data-processing unit of the computer equipment is interrupted in the inactive mode.

9. A security method according to any one of Claims 1 to 8 wherein the display of information on the screen during the active mode of the computer equipment is replaced in the inactive mode by a display derived from an auxiliary source of video signals.

10. Security apparatus for use with computer equipment having a visual-display screen for displaying information, including means for detecting the proximity of an operator to the equipment for operating the computer equipment in an active mode, detection of such proximity being dependent upon the operator exhibiting a predetermined sensed-characteristic, and wherein the security apparatus also includes switch means for operation while the computer equipment is in its active mode with information displayed on the screen, to switch the computer equipment to an inactive mode by which the screen is cleared of that information when, and for as long as, proximity of the operator as aforesaid, is no longer detected by the detecting means.

11. Security apparatus according to Claim 10 wherein the means for detecting the proximity of the operator comprises a signal-emitting device to be carried by the operator and signal-receiving means for location with the computer equipment, the signal-receiving means being operative to detect reception of a specific signal emitted by the signal-emitting device, and the switch means being operative for switching the computer equipment from its active to inactive mode in the absence of detection of reception of said specific signal by the signal-receiving means.

12. Security apparatus according to Claim 11 wherein the signal-emitting device emits an encoded signal and the switch means is operative for switching the computer equipment from its active to inactive mode in the absence of detection of recognition of the encoded signal by the signal-receiving means.

13. Security apparatus according to Claim 11 or Claim 12 wherein said specific signal is a radio-frequency signal.

14. Security apparatus according to Claim 13 including means for making a radio-frequency signal transmission locally of the computer equipment, and wherein the signal-emitting device includes a transponder for transmitting said specific signal in response to reception thereby of said radio-frequency signal transmission.

15. Security apparatus according to any one of Claims 10 to 14 including an auxiliary source of video signals, and wherein the switch means is means for interrupting during the inactive mode of the computer equipment the supply to a visual-display unit of the computer equipment of video signals derived within that equipment and for supplying to the visual-display unit instead video signals supplied by the auxiliary source.

16. Computer equipment having a visual-display screen for displaying information, wherein the computer equipment is operative in an active mode in dependence upon detection of proximity of an operator to the equipment, detection of such proximity being dependent upon the operator exhibiting a predetermined sensed-characteristic, and wherein the computer equipment is arranged such that while in its active mode with information displayed on the screen, it is switched to an inactive mode clearing the screen of that information when, and for as long as, proximity of the operator as aforesaid, is no longer detected.

17. Computer equipment according to Claim 15 wherein the sensed-characteristic is emission of a specific signal and the computer equipment includes signal-receiving means that is operative to detect reception of said specific signal, and switch means for switching the computer equipment from its active to inactive mode in the absence of detection of reception of said specific signal by the signal-receiving means.

18. Computer equipment according to Claim 17 wherein the switch means is operative to switch the computer equipment from its active to inactive mode in the absence of detection of recognition of the encoded signal by the signal-receiving means.

19. Computer equipment according to Claim 17 or Claim 18 wherein said specific signal is a radio-frequency signal.

20. Computer equipment according to any one of Claims 16 to 19 wherein supply of data and control signals to and/or from a data-processing unit of the computer equipment is interrupted in the inactive mode.

21. Computer equipment according to any one of Claims 16 to 20 wherein the display of information on the screen during the active mode is replaced in the inactive mode by a display derived from an auxiliary source of video signals.
